# EUROPEAN PATENT APPLICATION

(11) **EP 3 115 672 A1**
(43) Date of publication of application: **11.01.2017**
(21) Application number: 16177912.9
(22) Date of filing: 05.07.2016
(51) Int. Cl.: F16L 55/164, B05D 7/22

(54) **PIPE REFURBISHMENT**

(30) Priority: 06.07.2015 GB 201511778
(71) Applicant: M W Polymer Products Ltd, Little Eaton, Dergyshire DE21 5EG (GB)
(72) Inventor: Wild, Michael David, Little Eaton, Derbyshire DE21 5EG (GB)
(74) Representative: Sales, Robert Reginald

(57) **Abstract**

A method of refurbishing a gas pipe 10, and particularly a method of refurbishing a gas pipe network 34 in a multiple occupancy building. The method comprises causing a flow of air through the pipe 10 and injecting a settable material into the air flow such that as the material is caused to flow along the pipe 10 the material sets on the inside walls of the pipe 10 to provide an internal lining 32 thereto.

## Description

This invention concerns a method of refurbishing pipes, a method of refurbishing a pipe network, and particularly but not exclusively a method of refurbishing a gas pipe network in a multiple occupancy building.

Pipes that are used to supply gas to domestic properties are usually made of iron and have little or no protection against corrosion. In some instances these pipes can be more than 50 years old, and corrosion may be such that the pipe wall thickness can become very thin. This produces a high risk of gas leakage, potentially resulting in deaths and property damage from explosion and fires.

This corrosion problem is particularly common in pipes that feed gas to residents living in multi occupancy properties and buildings such as blocks of flats or tenements. In such buildings gas network systems were often installed during construction, such that replacement of pipes can be very difficult if not sometimes impossible, due to the locations of the pipes such as behind and within structures, such as lift shafts, stairways and cupboards. Such networks, and particularly in high rise blocks of flats, can be very long, complex and difficult to access.

According to a first aspect of the invention there is provided a method of refurbishing a pipe, the method comprising causing a flow of air through the pipe, and injecting a settable material into the air flow such that as the material is caused to flow along the pipe, the material sets on the inside walls of the pipe to provide an internal lining thereto.

The settable material may be a two part resin, and may be a thermosetting resin. The resin may be a polyurethane resin which may have a polyol base and an isocyanate activator.

Prior to carrying out the injection of the settable material the pipe may be purged.

The air velocity in the pipe may be measured to indicate where on the pipe settable material should be injected. A connection may be made into the pipe at each location where it is determined that settable material should be injected.

The air flow may be caused by blowing air into one end of the pipe.

The air flow may be caused by connecting a source of reduced pressure to an other end of the pipe.

The source of reduced pressure may comprise an evacuated container, which container may be portable and could be wearable on an operative's back.

A length of transparent or translucent piping may be connected to the other end of the pipe such that when material is seen to line the length of piping, a visual indication is provided that the pipe has been lined with settable material.

The length of piping may be connected to the source of reduced pressure so that when the material is seen to line the length of piping a connection to the source of reduced pressure can be closed to prevent material entering thereinto.

According to a further aspect of the invention there is also provided a method of refurbishing a pipe network, the method comprising using a method according to any of the preceding nine paragraphs.

The network may comprise a feed pipe and a plurality of branches leading therefrom.

Prior to carrying out the injection of the settable material, the network may be disconnected from a supply of fluid, and the network purged.

A supply of compressed air may be connected to the feeder pipe and compressed air supplied into the feed pipe. The air velocity may be measured at each branch to indicate where on the network settable material should be injected.

A connection may be made into the network at each location where it is determined that settable material should be injected.

If it is detected that at any location, and particularly at any branch end, that there is not sufficient air flow from the supply of compressed air to urge the settable material along the respective part of pipe, then a connection may be made to a source of reduced pressure to suck air through the respective part of the network, and especially the respective branch.

According to a still further aspect of the invention there is provided a method of refurbishing a gas pipe network in a multi occupancy building, the method comprising using a method according to any of the preceding six paragraphs.

The network may comprise a feed pipe connectable to a gas supply and a plurality of branches leading to individual properties.

Prior to carrying out the injection the settable material network may be disconnected from a gas supply, including disconnecting each branch from a respective gas meter or other installation, and the network purged of gas.

Embodiments of the present invention will now be described by way of example only and with reference to the accompanying drawings, in which:-
Fig. 1 is a diagrammatic partially cut away illustration of a gas pipe showing a method according to the invention being carried out; and
Fig. 2 is a diagrammatic representation of the method being carried out in a gas pipe network.

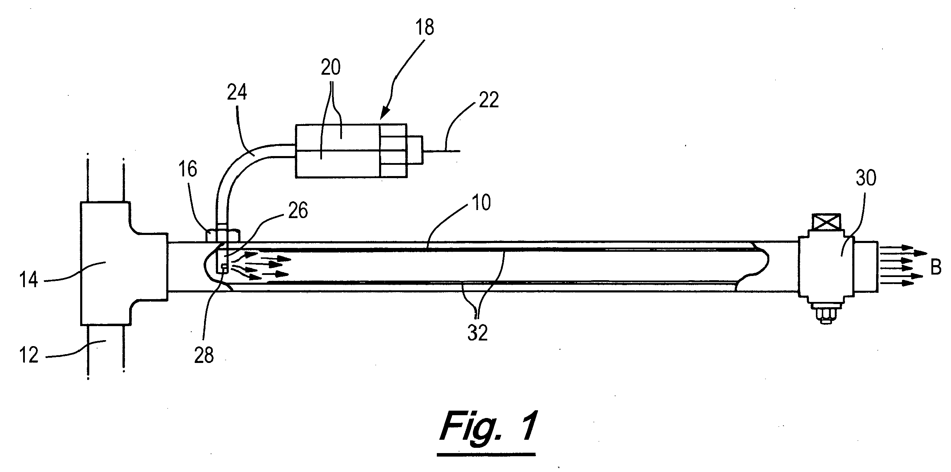

Fig. 1 diagrammatically shows a gas pipe 10 being refurbished by a method according to the invention. The gas pipe 10 is a branch of a main feed pipe 12 extending from a junction 14. A hole has been drilled into the pipe 10 adjacent the junction 14 which hole is tapped and threaded and provided with a mounting nut 16 on its outside.

A resin injection unit 18 is threadably connected to the hole. The unit comprises two parallel cylinders 20 each containing a one part of a two part resin, and a hand operated dispensing gun 22. In this instance the resin is a two part polyurethane, with a one of the cylinders 20 holding a polyol base, and the other an isocyanate activator. The two parts of the resin are injected into a flexible pipe 24 and into a fixed pipe 26 which extends to substantially the middle of the pipe 10 and has an opening 28 on one side.

The pipe 10 is being shown being lined from adjacent the junction 14 to an emergency control valve 30. An air flow through the gas pipe 10 towards the emergency control valve 30 is caused. If possible this would probably be provided by a compressor connected to the feed pipe 12.

If sufficient air flow could not be provided by such an arrangement, a source of reduced pressure could be connected downstream of the emergency control valve to provide an air flow as shown by the arrows.

As air is caused to flow through the pipe 10 the resin is injected substantially centrally through the opening 28 into the pipe 10. In the middle of the pipe there is substantially no friction and the resin will flow quite freely with the air. Around the inside edges of the gas pipe 10 there will be friction and a reduced air flow, and so resin will be deposited on the inside of the pipe 10 to provide a coating 32. This would typically provide a coating which is around 3.5mm thick, thereby significantly lengthening the safe serviceable life of the pipe 10. Whilst the gas pipe 10 may have potentially corroded in place it will provide support and protection for the coating 32 provided therewithin.

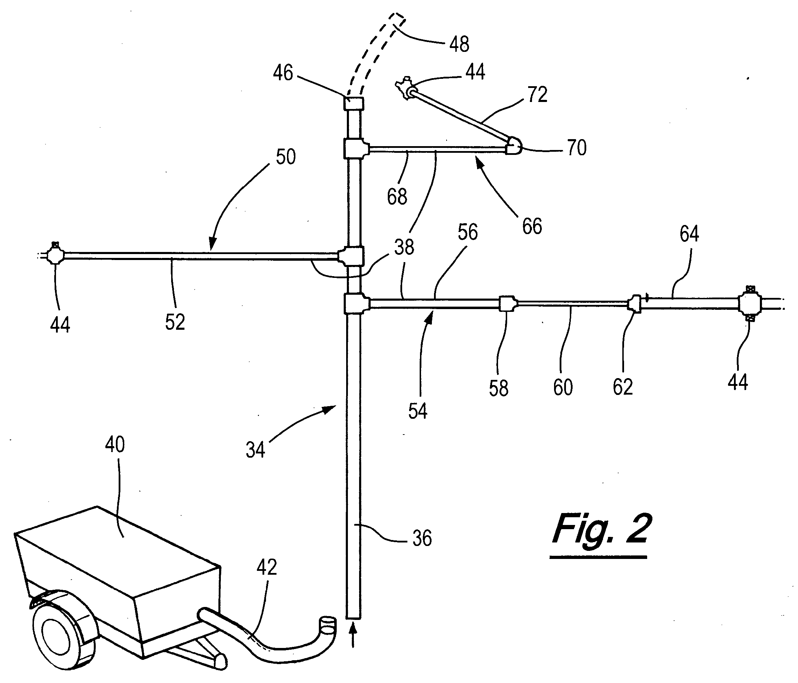

Fig. 2 is a diagrammatic representation of a gas pipework 34 in a multi occupancy building such as a block of flats, showing lining of the pipe network 34. The network 34 comprises a main feed pipe 36 extending vertically, and three branches 38 extending therefrom. It should be realised that this is a diagrammatic representation, and in general a large number of branches would be provided extending from the feed pipe 36.

The lower end of the feed pipe 36 is connectable to a gas inlet for the building. In Fig. 2 the feed pipe 36 has been disconnected from the gas inlet and is connectable to a hose 42 of mobile compressor 40 to cause air to be blown upwardly through the feed pipe 36 and out through the branches 38.

To refurbish the feed pipe 36, after disconnection from the gas supply, the network 34 would be purged of gas, and the compressor 40 could be used for this purpose. Each branch 38 includes an emergency control valve 44 and these would be opened to enable each branch 38 to be purged. After purging the emergency control valves 44 would be closed.

An end cap 46 at the upper end of the feed pipe 36 is removed, and a length of transparent or translucent piping 48 would be connected thereto. A flow of air through the feed pipe 36 is caused, and the air flow is measured at the upper end. In the light of the measured air flow, the length of the feed pipe 36, and also the diameter of the feed pipe 36, which in this instance would be a 2" pipe (5cm), decisions would be made as to where along the feed pipe 36 it would be necessary to provide holes into the pipes 36 to supply resin as described above.

The feed pipe 36 will then be lined in one or more lengths dependent on the above calculations with the resin to provide a lining for the feed pipe. When resin is seen lining the piping 48, a visual indication is provided that the feed pipe 36 has been lined up to its upper end, and therefore the process is complete.

Once the feed pipe 36 has been lined, the piping 48 would be removed and the end cap 46 replaced. Each individual branch 38 can now be lined as required. It is to be realised that beyond each respective emergency control valve 44 a gas meter and/or other installation would be provided, and these would be disconnected during the lining process.

As shown in Fig. 2 the left hand branch 50 includes a length 52 of 1" (2.5cm) pipe similar to that illustrated in Fig. 1. With the respective emergency control valve 44 open, but the other emergency control valves 44 closed, and the end cap 46 closed, the air flow at the respective emergency control valve 44 caused by the compressor 40 is measured to determine whether this would be sufficient to cause lining of the branch 50 with a settable resin. If so resin would be injected into the branch 50 adjacent the feeder pipe 36 as described in relation to Fig. 1. In relation to the diameter and length of the branch 50, and also in view of the air flow measured at the respective emergency control valve 44, a calculation can be made as to whether resin requires to be injected at one or more spaced points along the branch 50 to provide a required lining thereto.

If an insufficient air flow is measured at the respective emergency control valve 44, a source of reduced pressure could be connected to the respective emergency control valve 44. This could be in the form of one or more evacuated tanks, which potentially could be worn and carried on an operative's back. The tanks could typically be at a reduced pressure of -2 bar. Again a length of transparent or translucent piping will be connected to the end of the branch 50 to indicate when the branch 50 has been lined with resin, and if a source of reduced pressure is used, the piping can connect thereto to prevent resin being drawn into for instance the evacuated tanks.

Two branches are shown on the right hand side of the feed pipe 36, and the lowermost branch 54 shows a typical arrangement with an initial length 56 of 1" pipe (2.5cm) leading to a reducing coupling 58 and a length 60 of ¾" pipe (approx. 2cm) leading to a further coupling 62 and a further length 64 of 1" pipe (2.5cm). The respective pipe lengths 56, 60 and 64 can be lined in a similar manner, but with calculations to indicate particularly where the resin should be injected to provide a required lining for each pipe length 56, 60,64.

The topmost branch 66 on the right hand side has a length 68 of ¾" pipe (approx. 2cm) pipe leading to a 90° elbow 70 and a further length 72 of ¾" (approx. 2cm) pipe. Again appropriate measurements and calculations will be required to determine where resin should be injected to adequately line the pipes 68, 77, and for instance it may be appropriate to inject resin on the elbow 70 to line the pipe 72.

There is thus described a method of lining pipes and particularly gas pipes to refurbish the pipes and provide for long term safe usage. The method is particularly applicable to use in multi occupancy buildings which may have very complex networks. The use of compressed air and/or a source of reduced pressure means that the different respective branches can be lined as required.

The injection can be carried out in a quite straightforward manner, with only a small hole being necessary to form at a respective location in a pipe. The compressor is only required to be provided for instance outside the building, or at a lower part thereof. When it is required to provide reduced pressure, this can readily be carried out for instance by evacuated chambers carried on a person's back which can thus readily be connected in a domestic location such as a meter cupboard or elsewhere in a flat or other dwelling. The use for instance of the transparent/translucent piping allows for a ready visual indication of when lining is complete, without spillage of the lining material.

It is to be realised that a wide range of modifications may be made without departing from the scope of the invention. For instance different lining materials could be used, and these could be introduced into the pipes in a different manner. Other means for producing an air flow may be used.

Whilst the invention has been particularly described in relation to a network of gas pipes in a multi occupancy building, it may be applicable in other locations, and also in different types of pipes, such as for instance water or other pipes.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of refurbishing a pipe, the method comprising causing a flow of air through the pipe, and injecting a settable material into the air flow such that as the material is caused to flow along the pipe, the material sets on the inside walls of the pipe to provide an internal lining thereto.

2. A method according to claim 1, in which the settable material is any of:
a two part resin; a thermosetting resin; a polyurethane resin; a resin with a polyol base and an isocyanate activator.

3. A method according to claims 1 or 2, in which prior to carrying out the injection of the settable material, the pipe is purged.

4. A method according to any of the preceding claims, in which the air velocity in the pipe is measured to indicate where on the pipe settable material should be injected.

5. A method according to any of the preceding claims, in which a connection is made into the pipe at each location where it is determined that settable material should be injected.

6. A method according to any of the preceding claims, in which the air flow is caused by blowing air into one end of the pipe.

7. A method according to any of the preceding claims, in which the air flow is caused by connecting a source of reduced pressure to another end of the pipe, the source of reduced pressure may comprise an evacuated container, which container may be portable, and may be wearable on an operative's back.

8. A method according to any of the preceding claims, in which a length of transparent or translucent piping is connected to the other end of the pipe such that when material is seen to line the length of piping, a visual indication is provided that the pipe has been lined with settable material.

9. A method according to claim 8, when dependent on claim 7, in which the length of piping is connected to the source of reduced pressure so that when the material is seen to line the length of piping a connection to the source of reduced pressure can be closed to prevent material entering thereinto.

10. A method of refurbishing a pipe network comprising a feed pipe and a plurality of branches leading therefrom, the method comprising using a method according to any of the preceding claims.

11. A method according to claim 10, in which a supply of compressed air is connected to the feed pipe and compressed air supplied into the feed pipe.

12. A method according to claims 10 or 11, in which the air velocity is measured at each branch to indicate where on the network settable material should be injected.

13. A method according to any of claims 9 to 11, in which prior to carrying out the injection of the settable material, the network is disconnected from a supply of fluid, and the network purged, and a connection may be made into the network at each location where it is determined that settable material should be injected.

14. A method according to any of claims 11 to 13 when dependent on claim 10, in which if it is detected that at any location, and particularly at any branch end, there is not sufficient air flow from the supply of compressed air to urge the settable material along the respective part of pipe, then a connection is be made to a source of reduced pressure to suck air through the respective part of the network, and especially the respective branch.

15. A method of refurbishing a gas pipe network in a multi occupancy building which network comprises a feed pipe connectable to a gas supply and a plurality of branches leading to individual properties the method comprising using a method according to any of claims 10 to 14, in which prior to carrying out the injection of the settable material, the network is disconnected from a gas supply, including disconnecting each branch from a respective gas meter or other installation, and the network purged of gas.
